# EUROPÄISCHE PATENTSCHRIFT

(11) **EP 0 743 120 B1**
(45) Veröffentlichungstag und Bekanntmachung des Hinweises auf die Patenterteilung: **29.12.1997**
(21) Anmeldenummer: 96107896.1
(22) Anmeldetag: 17.05.1996
(51) Int. Cl.: B23D 1/00, B23Q 16/00

(54) **Winkelanschlag**
Angled stop
Butée angulaire

(30) Priorität: 19.05.1995 DE 29507952 U
(43) Veröffentlichungstag der Anmeldung: 20.11.1996
(73) Patentinhaber: Wilhelm Altendorf GmbH & Co. KG, D-32429 Minden (DE)
(72) Erfinder: Thiele, Siegfried Dipl.-Ing., 32429 Minden (DE); Tweer, Rolf Dipl.-Ing., 32429 Minden (DE)
(74) Vertreter: Eisenführ, Speiser & Partner

(56) Entgegenhaltungen:
- EP-A- 0 615 812
- DE-B- 1 131 487
- DE-U- 8 629 574
- GB-A- 1 187 820

## Beschreibung

Die Erfindung betrifft einen Winkelanschlag für Werkzeugmaschinen, insbesondere für Formatkreissägen, mit einer eine Längsführung bildenden Schiene und mindestens zwei in Schienenlängsrichtung bewegbaren Anschlagklappen.

Anschläge im allgemeinen dienen dem maßgenauen Herstellen von Werkstücken. Sägen, insbesondere Formatkreissägen sind üblicherweise mit mehreren verschiedenen Anschlägen ausgestattet. Neben dem Parallelanschlag für Sägeschnitte parallel zu einer Werkstückkante spielt vor allem der Winkel- oder Linksanschlag eine Rolle. Ein solcher Winkelanschlag besteht üblicherweise zumindest aus einer sich im wesentlichen senkrecht zur Sägeblattebene erstreckenden Anschlagschiene, die an einem parallel zur Sägeblattebene verfahrbaren Querschlitten angebracht ist und wenigstens eine Anschlagklappe trägt, an der das Werkstück während des Sägens anliegt.

EP-A-0 615 812 betrifft eine Vorrichtung, beider an einer verfahbaren Schiene in gleichmäßigen Abständen schwenkbare Anschlagklappen angebracht sind. Bei dieser Vorrichtung sind alle Anschlagklappen ständig fest an die Schiene angekoppelt, so daß sämtliche Anschlagklappen und nicht nur die jeweils benötigte beim Verfahren der Schiene ständig mitgewegt werden.

Eine wesentliche Rolle für die Maßgenauigkeit des fertigen Werkstückes spielt dabei die Genauigkeit, mit der die Anschlagklappe auf der Schiene positioniert wird. Für ein schnelles, bequemes und genaues Einstellen sind Anschlagschienen bekannt, bei denen eine Anschlagklappe mit Hilfe eines Antriebs auf gewünschte Positionen gefahren werden kann (US-A-5 251 142). Herkömmliche Anschlagschienen mit einer angetriebenen Anschlagklappe erfordern dann, wenn sie einen großen Verstellbereich abdecken sollen, große, raumgreifende, schwere und damit teure Konstruktionen.

Dieses Problem soll mit der Erfindung gelöst werden, indem sie einen Winkelanschlag mit einem großen Verstellbereich bietet, der dennoch raumsparend, leicht und günstig herzustellen ist.

Zur Lösung dieses Problems wird ein Winkelanschlag der eingangs genannten Art vorgeschlagen, welcher einen auf der Schiene geführten Wagen aufweist, der mittels eines Antriebs und einer Steuerung auf entlang der Schiene vorgebbare Positionen bewegbar ist und mit höchstens einer Anschlagklappe permanent verbunden sowie mit weiteren Anschlagklappen in feststehenden und für jede Anschlagklappe unterschiedlichen Abständen wechselweise koppelbar ist. Der Kerngedanke der Lösung besteht darin, daß der Verstellbereich des Winkelanschlags in mehrere Teilbereiche aufgeteilt wird, die jeweils von einer anderen Anschlagklappe abgedeckt werden. Der Wagen muß dabei nur über die Länge eines Teilbereiches verfahren werden können, so daß nur ein kleiner sägeblattseitiger Teil des Winkelanschlages mit einer zwangsläufig stabilen Schiene als Längsführung für den Wagen ausgestattet sein muß. Dies spart Gewicht und Kosten.

Einem einfachen An- und Abkoppeln der Anschlagklappen an den Wagen ist es förderlich, wenn auf der Längsschiene ein fester Ort für das An- und Abkoppeln der Anschlagklappen an bzw. von den/dem Wagen vorgesehen ist. Zusäzlich können die koppelbaren Anschlagklappen beim Abkoppeln in einer Parkposition verriegelt werden.

In einer Ausführungsvariante ist der Winkelanschlag mit nur zwei Anschlagklappen ausgestattet und der Wagen mit der ersten Anschlagklappe permanent verbunden und mit der zweiten Anschlagklappe in einem festen Abstand koppelbar. Bei dieser einfachen Variante des Winkelanschlags ist der Verfahrweg des Wagens vorteilhafterweise mindestens genauso groß wie der Abstand der Anschlagflächen der beiden Anschlagklappen voneinander, wenn die zweite Anschlagklappe an den Wagen gekoppelt ist.

Die Variante der Erfindung zeichnet sich durch den geringen Aufwand, der zu ihrer Verwirklichung nötig ist, vorteilhaft aus. Alle wesentlichen Vorteile der Erfindung werden auf einfache Weise erzielt. Insbesondere beträgt der Verfahrweg des Wagens wenn überhaupt nur etwas mehr als die Hälfte des gesamten Verstellbereichs des Winkelanschlags. Wenn die zweite Anschlagklappe in ihrer Parkposition verriegelt ist, baut der gesamte Winkelanschlag nicht größer als ein regulärer Winkelanschlag, dessen Verstellbereich nur die Hälfte des erfindungsgemäßen Winkelanschlages beträgt.

Um die Steuerung des Wagens zu erleichtern, ist der Winkelanschlag vorteilhafterweise mit einem Sensor ausgestattet, mit dessen Hilfe eine feste Position des Wagens auf der Längsführung festgestellt werden kann. Dieser Sensor ist günstigerweise an der Längsführung angebracht.

Die Erfindung soll nun anhand eines Ausführungsbeispiels mit Hilfe der Figuren erläutert werden. Es zeigen:
- Fig. 1: eine Längsführung mit Wagen und zwei Anschlagklappen in der Aufsicht;
- Fig. 2: die Längsführung mit Wagen und Anschlagklappen in der Seitenansicht;
- Fig. 3: einen Schnitt durch die Längsführung und den Wagen in der Koppelposition;
- Fig. 4: einen Schnitt durch die Längsführung bei der zweiten Anschlagklappe;
- Fig. 5-7: Skizzen zum Betrieb der erfindungsgemäßen Anschlagschiene.

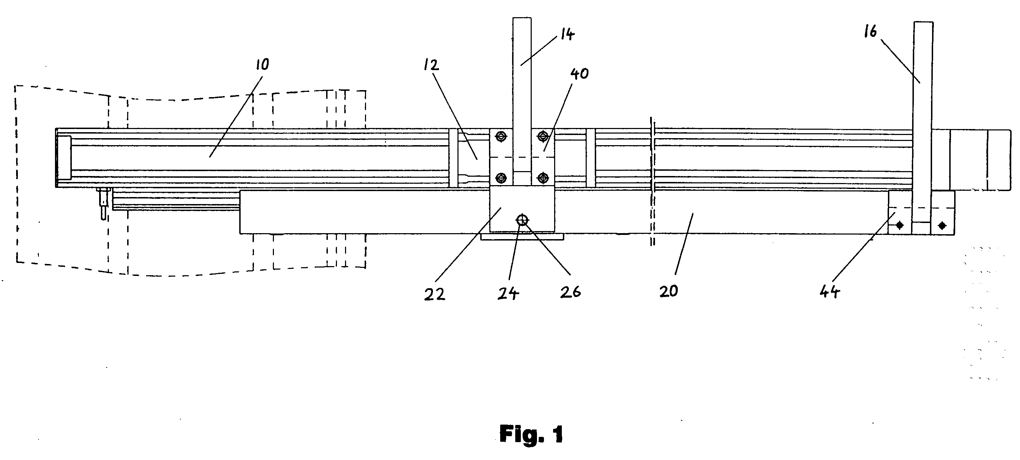

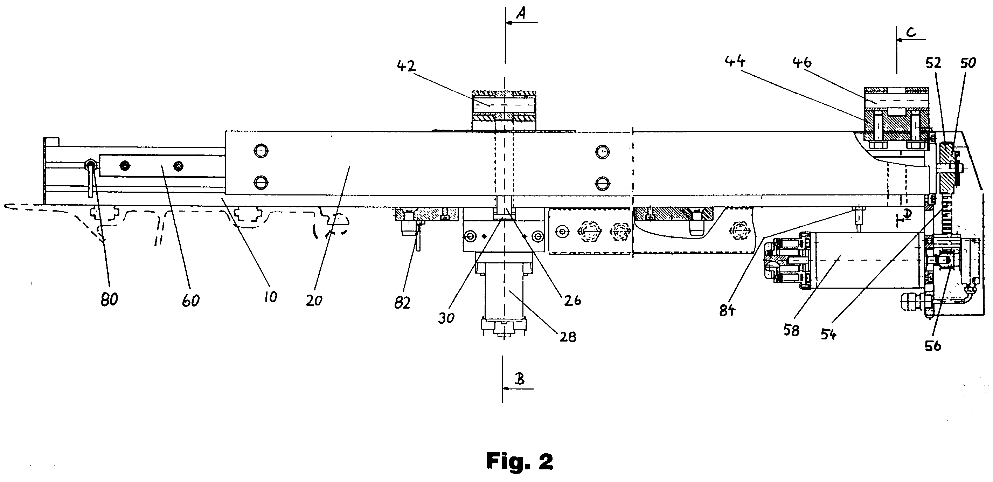

Figur 1 ist zu entnehmen, daß die als Längsführung dienende Schiene 10 den Wagen 12 mit der ersten Anschlagklappe 14 trägt. Außerdem ist die zweite Anschlagklappe 16 zu erkennen, die an dem Profil 20 schwenkbar befestigt ist, welches seinerseits wie der Wagen 12 parallel zur Schiene 10 geführt wird, so daß der Wagen 12 und das Profil 20 in Längsrichtung der Schiene 10 bewegbar sind. Fester Bestandteil des Wagens 12 ist eine erste Kupplungshälfte 22 mit einer Bohrung 24, in welche ein Kupplungsbolzen 26 eingreifen kann, um das Profil 20 an den Wagen 12 zu koppeln. Der Kupplungsbolzen 26 ist dazu in dem Profil 20 in Richtung seiner Längsachse verschiebbar gelagert. Um den Kupplungsbolzen 26 bewegen zu können, ist an der Schiene 10 ein Aktuator 28 fest angebracht, der genau dann den verbreiterten Kopf 30 des Kupplungsbolzens 26 greifen kann, wenn sich - wie in Fig. 2 dargestellt - das Profil 20 genau in der richtigen Position bezüglich der Schiene 10 befindet. Im Ausführungsbeispiel ist der Aktuator 28 elektromotorisch betrieben und kann den Bolzen mit Bezug auf Fig. 2 heben und senken. Ist der Bolzen 26 angehoben, greift er in die Bohrung 24 der ersten Kupplungshälfte 22 an dem Wagen 12 ein, so daß das Profil 20 und der Wagen 12 miteinander gekoppelt sind. Wenn der Bolzen 26 dagegen in seiner unteren Position ist, wird er von einem Verriegelungselement 32 seitlich eingefaßt, so daß das Profil 20 in einer festen Parkposition bezüglich der Schiene 10 verriegelt ist. Je nachdem, ob sich der Kupplungsbolzen 26 in seiner oberen oder in seiner unteren Position befindet, ist das Profil 20 ständig entweder an den Wagen 12 gekoppelt oder in der Parkposition verriegelt.

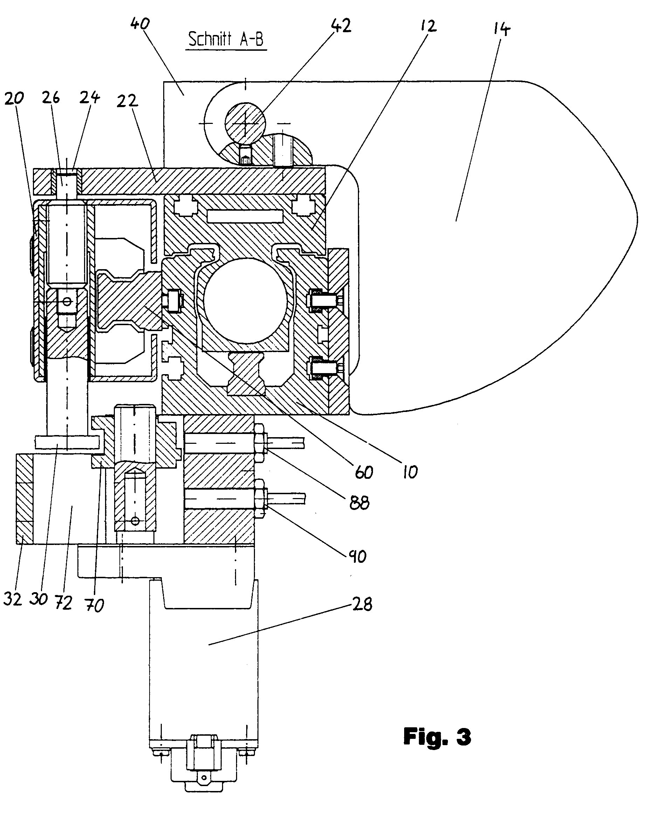

Ausführungsdetails des gerade beschriebenen Mechanismus zum Ankoppeln des Profils 20 an den Wagen 12 und das Verriegeln des Profils 20 in seiner Parkposition werden weiter unten anhand von Fig. 3 erläutert. Zunächst soll es um weitere Merkmale des Ausführungsbeispiels gehen, die sich den Fig. 1 und 2 entnehmen lassen:

Bestandteil des Wagens 12 ist neben der ersten Kupplungshälfte 22 auch ein Schwenklager 40 für die erste Anschlagklappe 14. In Fig. 2 ist die erste Schwenkachse 42 für die erste Anschlagklappe 14 zu erkennen. Ein zweites Schwenklager 44 für die zweite Anschlagklappe 16 ist an dem Profil 20 befestigt. Die dazugehörige zweite Schwenkachse 46 ist ebenfalls in Fig. 2 dargestellt. In Fig. 1 sind beide Anschlagklappen 14 und 16 in ihrer Arbeitsposition dargestellt, die sich mit Bezug auf Fig. 1 oberhalb der Längsführung 10 befindet. Jede der beiden Anschlagklappen 14 und 16 kann um ihre in Fig. 1 gestrichelt angedeuteten Schwenkachsen 42 und 46 aus ihrer jeweiligen Arbeitsposition herausgeschwenkt werden; die Anschlagklappen 14 und 16 würden dann bezüglich Fig. 1 nach unten ragen.

Nur der Fig. 2 sind Details eines Antriebs für den Wagen 12 zu entnehmen. Zentral in der Schiene 10 ist eine Antriebsspindel 50 angeordnet. Diese ist in Fig. 2 größtenteils verdeckt, so daß nur ihr getriebeseitiges Ende in der Figur rechts zu erkennen ist. Die Antriebsspindel 50 arbeitet mit einem nicht dargestellten Gegenelement an dem Wagen 12 zusammen, so daß der Wagen 12 durch Drehen der Antriebsspindel 50 in Längsrichtung der Schiene 10 bewegt werden kann (mit Bezug auf die Fig. 1 und 2 ist dies eine Links- oder Rechtsbewegung des Wagens 12). An ihrem getriebeseitigen Ende trägt die Antriebsspindel 50 ein Zahnrad 52, welches zusammen mit einem Zahnriemen 54 und einem Ritzel 56 auf der Welle eines Antriebsmotors 58 den weiteren Antrieb für den Wagen 12 bildet.

Schließlich ist den Fig. 1 und 2 noch zu entnehmen, daß an der Schiene 10 eine Profilführung 60 befestigt ist, durch die das Profil 20 parallel zur Schiene 10 gehalten und geführt wird.

Der in Fig. 2 gekennzeichnete und in Fig. 3 abgebildete Schnitt A-B durch die Schiene 10, den Wagen 12, das Profil 20, den Kupplungs- und Verriegelungsmechanismus für den Kupplungsbolzen 26 u.s.w. zeigt diese sowie alle mit diesen Teilen verbundenen Teile im Detail. Zunächst zu den Details des Kupplungs-und Verriegelungsmechanismus': Die wagenseitige Kupplungshälfte 22 ist fest an dem Wagen 12 angebracht und mit diesem zusammen entlang der Schiene 10 bewegbar. Mit Bezug auf Fig. 3 ist dies eine Bewegung in die Zeichenebene hinein und aus ihr heraus. In Fig. 3 ist der Kupplungsbolzen 26 in seiner oberen Position dargestellt; dies ist die Position, in der das Profil 20 und der Wagen 12 aneinandergekoppelt sind, weil der in dem Profil 20 geführte Kupplungsbolzen 26 in die Bohrung 24 der wagenseitigen Kupplungshälfte 22 eingreift. In dem dargestellten Zustand können also das Profil 20 und der Wagen 12 nur gemeinsame Bewegungen in die Zeichenebene hinein und aus ihr heraus durchführen. Bei solch einer Bewegung wird das Profil 20 von der seitlich an der Schiene 10 angebrachten Profilführung 60 geführt.

Der Bolzen 26 kann aber auch mittels eines Nutelementes 70 von dem Aktuator 28 in seine nicht dargestellte untere Position bewegt werden. Das Nutelement greift dabei an dem überkragenden Kopf 30 des Kupplungsbolzens 26 an. Wenn das Nutelement 70 von dem Aktuator 28 nach unten bewegt wird, nimmt es den Kupplungsbolzen 26 mit, so daß er mit seinem Kopf 30 in eine Öffnung 72 in dem Verriegelungselement 32 eingreift. In seiner unteren Position wird der Kupplungsbolzen 26 von dem Verriegelungselement 32 seitlich gehalten, so daß das Profil 20 mit der Schiene 10 in dessen Parkposition verriegelt ist. Das Bewegen des Bolzens 26 mittels des Aktuators 28 und des Nutelementes 70 ist nur dann möglich, wenn sich der Wagen 12 und das Profil 20 in der Parkposition des Profils 20 befinden, weil nur dann der Kopf 30 des Verriegelungsbolzens 26 in das Nutelement 70 eingreift.

In Fig. 3 ist weiterhin die erste Anschlagklappe 14 in ihrer Arbeitsposition abgebildet, aus der sie durch Schwenken um die erste Schwenkachse 42 herausgeschwenkt werden kann. Die erste Schwenkachse 42 ist Teil des ersten Schwenklagers 40, welches fest mit dem Wagen 12 verbunden ist.

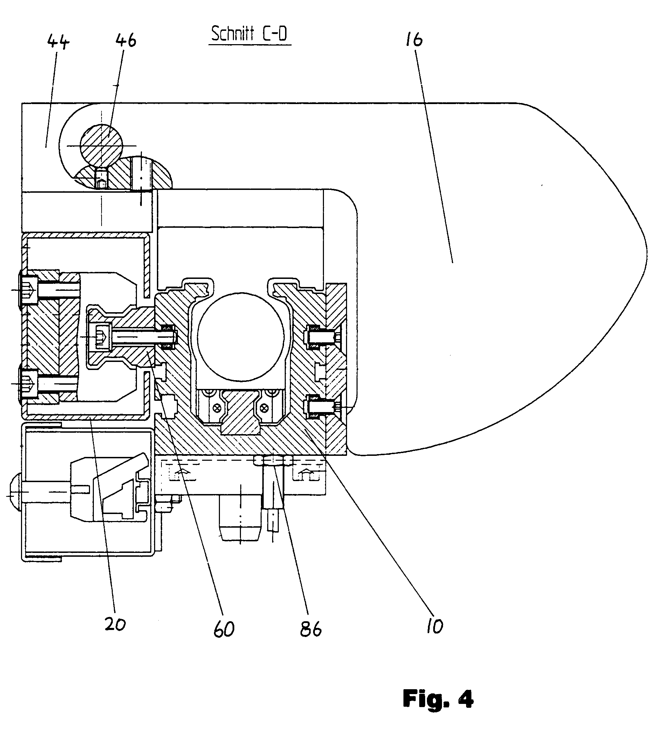

Fig. 4 zeigt den in Figur 2 gekennzeichneten Schnitt C - D durch die Schiene 10 und das Profil 20 im Bereich der zweiten Anschlagklappe 16. Zu erkennen ist wieder die Schiene 10 mit seitlich angebrachter Profilführung 60, welche das Profil 20 trägt. An dem Profil 20 ist das zweite Schwenklager 44 befestigt, um dessen Schwenkachse 46 die zweite Anschlagklappe 16 aus ihrer dargestellten Arbeitsposition herausgeschwenkt werden kann.

Damit die beschriebene Vorrichtung mit einer Steuerung zusammenwirken kann, weist die Vorrichtung mehrere Näherungsinitiatoren auf, mit deren Hilfe sich bestimmte Positionen von Elementen der Vorrichtung erfassen lassen.

Ein erster innerer Näherungsinitiator 80 ist dort an der Schiene 10 angebracht, wo sich der Wagen 12 befindet, wenn dieser das sägeblattseitige Ende des ersten Teil-Verstellbereichs erreicht hat. Wenn sich der Wagen 12 in dieser Endposition befindet, gibt der erste innere Näherungsinitiator ein Signal aus. Entsprechend ist ein zweiter innerer Näherungsinitiators 82 dort angebracht, wo sich der Wagen 12 beim Erreichen des inneren Endes des zweiten Teil-Verstellbereichs befindet. An der Schiene 10 ist noch ein dritter äußerer Näherungsinitiator 84 befestigt, mit dessen Hilfe die Steuerung feststellen kann, ob sich der Wagen 12 in seiner am weitesten ausgefahrenen Position (mit Bezug auf die Fig. 1 und 2 links) befindet.

Neben den bereits genannten drei Näherungsinitiatoren (80, 82, 84) an der Schiene 10 sind noch zwei weitere, bezüglich der Schiene 10 ortsfeste Näherungsinitiatoren im Bereich des Kupplungs- und Verriegelungsmechanismus' vorgesehen, von denen ein oberer Näherungsinitiator 88 auf die obere Position des Nutelementes 70 anspricht, während ein unterer Näherungsinitiator 90 ein Signal ausgibt, wenn sich das Notelement 70 in seiner unteren Position befindet. Mit Hilfe der fünf Näherungsinitiatoren kann die Steuerung wesentliche Zustände der beschriebenen Vorrichtung erfassen und das An- und Abkoppeln des Profils 20 an den Wagen 12 sowie das Verriegeln des Profils 20 in dessen Parkposition steuern.

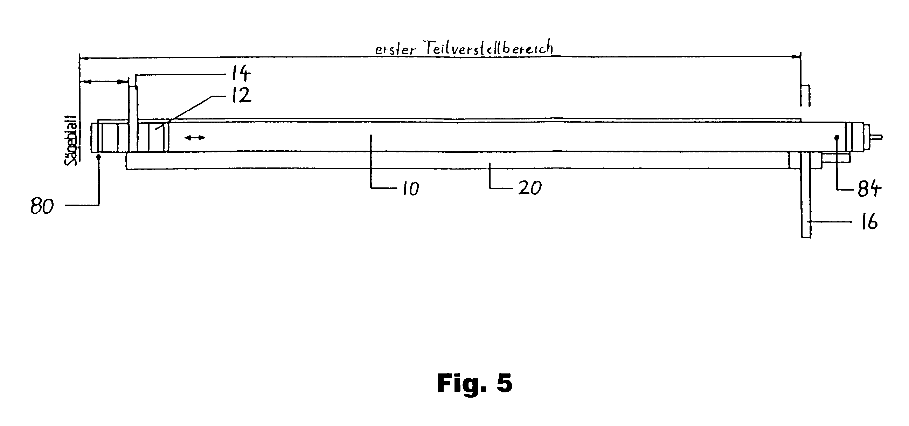

Wie dies im einzelnen abläuft, soll anhand der Fig. 5 bis 7 erläutert werden.

Wie eingangs erwähnt, wird der gesamte Verstellbereich des Winkelanschlags erfindungsgemäß in zwei Teil-Verstellbereiche aufgeteilt, beispielsweise in einen maschinennahen ersten Teil-Verstellbereich für Werkstücke zwischen 100 mm und 1600 mm Breite und in einen zweiten Teil-Verstellbereich für Werkstücke zwischen beispielsweise 1600 mm und 2800 mm Breite.

Innerhalb des ersten Teil-Verstellbereiches dient die erste Anschlagklappe 14 als Anschlag. Sie wird daher für Werkstücke bis 1600 mm Breite in ihre Arbeitsposition geschwenkt und von dem Wagen 12 auf eine der Werkstückbreite entsprechende Position gefahren (Fig. 5). Die zweite Anschlagklappe 16 wird dabei nicht benötigt; sie ist daher aus ihrer Arbeitsposition herausgeschwenkt. Das Profil 20, an dem die zweite Anschlagklappe befestigt ist, ist - solange nur die erste Anshlagklappe benötigt wird - in seiner Parkposition verriegelt.

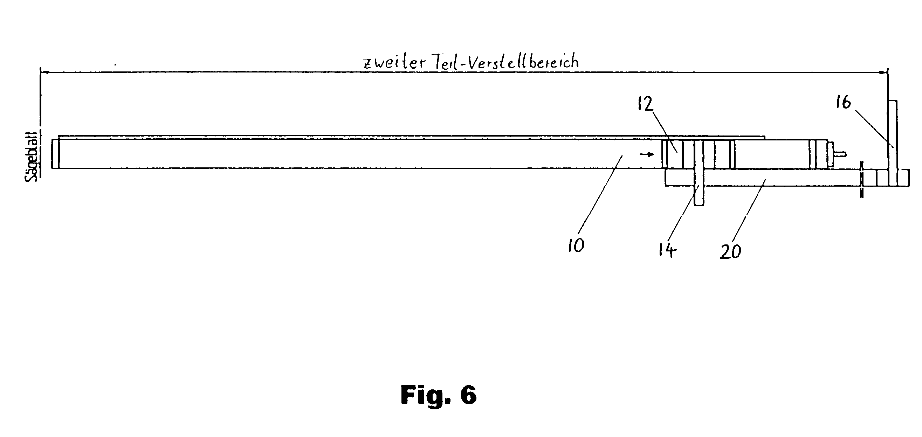

Falls die Sollbreite eines Werkstücks bei den beispielhaft gewählten Teil-Verstellbereichen über 1600 mm beträgt, wird die zweite Anschlagklappe 16 benötigt, die erste Anschlagklappe 14 dagegen nicht. Die erste Anschlagklappe 14 wird daher aus ihrer Arbeitsposition herausgeschwenkt und die zweite Anschlagklappe 16 in ihre Arbeitsposition geschwenkt. Der Wagen 12 wird mit dem Profil 20 gekoppelt, welches gleichzeitig aus seiner Parkposition entriegelt wird. Durch das an den Wagen 12 gekoppelte Profil 20 hat die Anschlagfläche der zweiten Anschlagklappe 16 in dem gewählten Beispiel einen festen Abstand von 1200 mm von der Anschlagfläche der ersten Anschlagklappe 14 an dem Wagen 12. Der Verstellbereich der zweiten Anschlagklappe ist dadurch gegenüber dem der ersten Anschlagklappe um 1200 mm nach außen, d.h. von dem Sägeblatt weg verlegt. Er liegt dementsprechend zwischen 1300 mm und 2800 mm (Figur 6).

Von der Steuerung wird das Profil 20 allerdings nur bei gewünschten Schnittbreiten über 1600 mm an den Wagen 12 gekoppelt, so daß der zweite Teil-Verstellbereich des Winkelanschlags, für den die zweite Anschlagklappe 16 vorgesehen ist, zwischen 1600 und 2800 mm liegt.

Wie erwähnt, ist die Steuerung mit Hilfe der Näherungsinitiatoren in der Lage, wesentliche Zustände des Winkelanschlags zu erfassen und zum Steuern des Wagens 12 auszuwerten.

Mit Hilfe des ersten inneren Näherungsinitiators 80, des zweiten inneren Näherungsinitiators 82 und des äußeren Näherungsinitiators 84 kann die Steuerung feststellen, ob der Wagen 12 die zu den beiden Teil-Verstellbereichen gehörenden äußeren und inneren Endpositionen erreicht hat und kann den Verfahrweg des Wagens 12 entsprechend begrenzen. Darüber hinaus erhält die Steuerung einen festen Referenzwert für die Position des Wagens 12, wenn einer der Näherungsinitiatoren 80, 82 oder 84 anspricht. Zum Anfahren von Positionen zwischen den Näherungsinitiatoren 80, 82 und 84 wird der Verfahrweg des Wagens 12 ausgehend von einer mit Hilfe eines der Näherungsinitiatoren ermittelten Referenzposition inkrementell aufgenommen. Hierzu ist ein inkrementeller Positionsgeber für den Wagen 12 vorgesehen. Dieser Positionsgeber kann außer mit Hilfe der Näherungsinitiatoren aber auch durch Vorgeben weiterer, bekannter Referenzpositionen geeicht werden.

Damit die Steuerung beim Ankoppeln des Profils 20 an den Wagen 12 - wenn von dem ersten auf den zweiten Teil-Verstellbereich gewechselt werden soll - oder zum Abkoppeln und Verriegeln des Profils 20 in seiner Parkposition - beim Wechseln vom zweiten auf den ersten Teil-Verstellbereich - unabhängig von einer Eichung des Positionsgebers ist, wird zumindest beim ersten Ankoppeln nach jedem Aus- und Wiedereinschalten der Steuerung der Wagen 12 zunächst auf die Position gefahren, bei der der zweite innere Näherungsinitiator 82 anspricht; von dort aus wid der Wagen 12 anschließend definiert zum Ort des An- und Abkoppelns gefahren. Der Verfahrweg, den der Wagen 12 zwischen der Position, bei dem der zweite innere Näherungsinitiator 82 anspricht, und dem Ort des An- und Abkoppelns zurücklegen muß, ist durch die Geometrie des Winkelanschlages vorgegeben und bekannt.

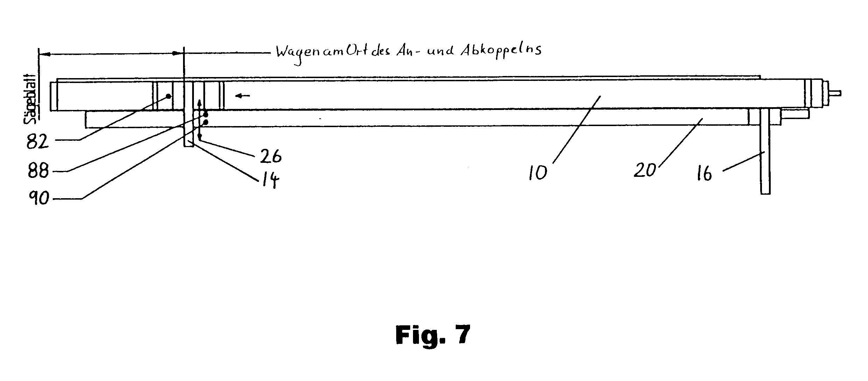

Wenn der Wagen 12 den Ort des An- und Abkoppelns erreicht hat (Figur 7), muß der Kupplungsbolzen 26 - wie zuvor beschrieben -je nachdem, ob das Profil 20 an den Wagen 12 angekoppelt oder von ihm abgekoppelt und verriegelt werden soll, von dem Aktuator 28 mittels des Nutelementes 70 angehoben oder abgesenkt werden. Während das Profil 20 in seiner Parkposition verriegelt ist, greift der Kopf 30 des Kupplungsbolzens 26 zwangsläufig in die Nut des Nutelementes 70 ein; wenn das Profil 20 dagegen mit dem Wagen 12 gekoppelt ist, greift der Kopf 30 des Kupplungsbolzens 26 nur dann in die Nut des Nutelementes 70 ein, wenn sich der Wagen 12 an dem Ort für das An- und Abkoppeln befindet.

Zum Abkoppeln des Profils 20 von dem Wagen 12 muß daher das Nutelement 70 von dem Aktuator 28 angehoben worden sein, bevor der Wagen 12 den Ort des An- und Abkoppelns erreicht hat, damit der Kopf 30 des Kupplungsbolzens 26 in die Nut des Nutelementes 70 hineingefahren wird. Die Steuerung erfährt dabei durch das Ansprechen des oberen Näherungsinitiators 88, daß sich das Nutelement 70 in seiner oberen Position zur Aufnahme des Kopfes 30 in seiner Nut befindet. Erst wenn sich nach dem Abkoppeln das Nutelement 70 in seiner unteren Position befindet, greift der Kupplungsbolzen 26 nicht mehr in die Bohrung in der ersten Kupplungshälfte 22 des Wagens 12 ein, so daß der Wagen 12 und das Profil 20 voneinander getrennt sind, und das Profil 20 aufgrund der Tatsache, daß der Kopf 30 des Kupplungsbolzens 26 von dem Verriegelungselement 32 seitlich gehalten wird, in seiner Parkposition verriegelt ist. Diese untere Position des Nutelementes 70 wird der Steuerung durch das Ansprechen des unteren Näherungsinitiators 90 gemeldet. Hat die Steuerung ein entsprechendes Signal erhalten, kann die erste Anschlagklappe mit Hilfe des Wagens 12 in eine entsprechende Position in dem ersten Teil-Verstellbereich gefahren werden.

Umgekehrtes gilt beim Ankoppeln des Profils 20 an den Wagen 12: Zunächst wird der Wagen 12 an den Ort des An- und Abkuppelns gefahren, dann wird der Verriegelungsbolzen 26 mit Hilfe des Aktuators 28 und des Nutelementes 70 angehoben, so daß das Profil 20 gleichzeitig aus der Parkposition entriegelt und an den Wagen 12 angekoppelt ist. Erst nachdem der obere Näherungsinitiator 88 angesprochen hat und damit der Steuerung signalisiert hat, daß sich der Verriegelungsbolzen 26 in seiner oberen Position befindet, kann die zweite Anschlagklappe 16 mit Hilfe des Profils 20 und des Wagens 12 auf eine gewünschte Position innerhalb des zweiten Teil-Verstellbereiches gefahren werden.

Da das An- und Abkoppeln des Profils 20 an den Wagen 12 Rüstzeit kostet, kann das Profil in den Fällen, in denen ständig zwischen dem ersten und dem zweiten Teil-Verstellbereich hin- und hergwechselt werden muß, permanent an den Wagen 12 gekoppelt werden. Um von dem einem auf den anderen Teil-Verstellbereich zu wechseln, müssen dann nur noch die beiden Anschlagklappen 14 und 16 entsprechend in ihre Arbeitsposition oder aus dieser heraus geschwenkt werden. Für das permanente Ankoppeln des Profils 20 an den Wagen 12 ist ein Schalter vorgesehen, durch dessen Betätigung das automatische An- und Abkoppeln des Profils 20 wahlweise ein- oder zugunsten einer permanenten Kopplung ausgeschaltet werden kann.

## Patentansprüche

1. Winkelanschlag für Werkzeugmaschinen, insbesondere für Formatkreissägen, mit einer eine Längsführung bildenden Schiene und mindestens zwei in Schienenlängsrichtung bewegbaren Anschlagklappen,
gekennzeichnet durch einen auf der Schiene geführten Wagen der mittels eines Antriebes und einer Steuerung auf entlang der Schiene vorgebbare Positionen bewegbar ist und mit höchstens einer Anschlagklappe permanent verbunden sowie mit weiteren Anschlagklappen in feststehenden und für jede Anschlagklappe unterschiedlichen Abständen wechselweise koppelbar ist.

2. Winkelanschlag nach Anspruch 1,
dadurch gekennzeichnet, daß auf der Schiene ein fester Ort für das An- und Abkoppeln der Anschlagklappen an bzw. von den/dem Wagen vorgesehen ist.

3. Winkelanschlag nach mindestens einem der vorhergehenden Ansprüche,
dadurch gekennzeichnet, daß die von dem Wagen abgekoppelten Anschlagklappen in einer Parkposition verriegelt sind.

4. Winkelanschlag nach mindestens einem der vorhergehenden Ansprüche,
dadurch gekennzeichnet, daß der Wagen mit einer ersten Anschlagklappe permanent verbunden und mit einer zweiten Anschlagklappe in einem feststehenden Abstand koppelbar ist.

5. Winkelanschlag nach Anspruch 4,
dadurch gekennzeichnet, daß der Verfahrweg des Wagens mindestens genauso groß wie der Abstand der Anschlagflächen der beiden Anschlagklappen voneinander ist, wenn die zweite Anschlagklappe an den Wagen gekoppelt ist.

6. Winkelanschlag nach mindestens einem der vorhergehenden Ansprüche,
dadurch gekennzeichnet, daß er wenigstens einen Sensor aufweist, mittels dessen eine feste Position des Wagens auf der Längsführung ermittelbar ist.

7. Winkelanschlag nach Anspruch 6,
dadurch gekennzeichnet, daß der Sensor an der Schiene angebracht ist.

8. Winkelanschlag nach Anspruch 4 oder 5,
dadurch gekennzeichnet, daß die zweite Anschlagklappe wahlweise permanent an den Wagen koppelbar ist.

## Claims

1. Angling stop for machine tools, in particular for panel saws, with a rail forming a longitudinal guide and with at least two stop flaps movable in the longitudinal direction of the rail,
characterised by a carriage guided on the rail, which carriage can be moved to predeterminable positions along the rail by means of a drive and a control means and is permanently connected to at most one stop flap and can also be coupled alternately to further stop flaps at fixed distances and distances differing for each stop flap.

2. Angling stop according to Claim 1, characterised in that a fixed location is provided on the rail for the coupling and uncoupling of the stop flaps to and from the carriage.

3. Angling stop according to at least one of the preceding claims, characterised in that the stop flaps which are uncoupled from the carriage are locked in a parking position.

4. Angling stop according to at least one of the preceding claims, characterised in that the carriage is permanently connected to a first stop flap and can be coupled to a second stop flap at a fixed distance.

5. Angling stop according to Claim 4, characterised in that the traverse path of the carriage is at least as great as the distance of the stop faces of the two stop flaps from one another when the second stop flap is coupled to the carriage.

6. Angling stop according to at least one of the preceding claims, characterized in that it has at least one sensor, by means of which a fixed position of the carriage on the longitudinal guide can be determined.

7. Angling stop according to Claim 6, characterised in that the sensor is attached to the rail.

8. Angling stop according to Claim 4 or 5, characterised in that the second stop flap can optionally be permanently coupled to the carriage.

## Revendications

1. Butée d'angle pour machines-outils, en particulier des scies circulaires de mise au format, comprenant un rail formant une glissière de guidage longitudinale et au moins deux clapets de butée qui peuvent se déplacer dans le sens longitudinal du rail,
caractérisée par un chariot guidé sur le rail, qui peut être déplacé à l'aide d'un moteur et d'une commande vers des positions prédéfinies le long du rail et qui est relié en permanence avec au maximum un clapet de butée, qui peut être attelé respectivement à d'autres clapets de butée situés à des distances fixes et différentes pour chaque clapet de butée.

2. Butée d'angle selon la revendication 1, caractérisée en ce qu'il est prévu un point fixe sur le rail pour atteler et dételer les clapets de butée avec le/les chariot(s).

3. Butée d'angle selon l'une quelconque des revendications précédentes, caractérisée en ce que les clapets de butée dételés du chariot sont verrouillés dans une position d'attente.

4. Butée d'angle selon l'une quelconque des revendications précédentes, caractérisée en ce que le chariot est relié en permanence à un premier clapet de butée et en ce qu'il peut être attelé à un deuxième clapet de butée à une distance fixe.

5. Butée d'angle selon la revendication 4, caractérisée en ce que la voie de circulation du chariot est au moins aussi longue que la distance entre les surfaces de contact des deux clapets de butée, lorsque le deuxième clapet de butée est attelé au chariot.

6. Butée d'angle selon l'une quelconque des revendications précédentes, caractérisée en ce qu'elle comprend au moins un capteur, destiné à déterminer une position fixe du chariot sur la glissière de guidage longitudinale.

7. Butée d'angle selon la revendication 6, caractérisée en ce que le capteur est monté sur le rail.

8. Butée d'angle selon la revendication 4 ou 5, caractérisée en ce que le deuxième clapet de butée peut être attelé, au choix, en permanence au chariot.
